# FASCICULE DE BREVET EUROPEEN

(11) **EP 2 981 470 B1**
(45) Date de publication et mention de la délivrance du brevet: **21.06.2017**
(21) Numéro de dépôt: 14722249.1
(22) Date de dépôt: 01.04.2014
(51) Int. Cl.: F03D 1/06, F03D 9/10, B64D 41/00, F03D 9/00, F03D 1/04

(54) **SYSTÈME DE RÉCUPÉRATION ET DE CONVERSION D'ÉNERGIE CINÉTIQUE ET D'ÉNERGIE POTENTIELLE EN ÉNERGIE ÉLECTRIQUE POUR AÉRONEF**
SYSTEM ZUR RÜCKGEWINNUNG UND UMWANDLUNG VON KINETISCHER ENERGIE UND POTENZIALENERGIE IN ELEKTRISCHE ENERGIE FÜR EIN FLUGZEUG
SYSTEM FOR RECOVERING AND CONVERTING KINETIC ENERGY AND POTENTIAL ENERGY INTO ELECTRICAL ENERGY FOR AN AIRCRAFT

(30) Priorité: 02.04.2013 FR 1352953
(43) Date de publication de la demande: 10.02.2016
(73) Titulaire: Safran Electrical & Power, 31702 Blagnac Cedex (FR)
(72) Inventeur: ROQUES, Serge, F-31700 Cornebarrieu (FR)
(74) Mandataire: Desormiere, Pierre-Louis
(86) Numéro de dépôt international: PCT/FR2014/050775
(87) Numéro de publication internationale: WO 2014/162092

(56) Documents cités:
- EP-A2- 0 346 711
- WO-A2-00/38985
- GB-A- 2 461 057
- US-A1- 2013 048 780

## Description

### Arrière-plan de l'invention

La présente invention concerne la génération d'énergie électrique dans des aéronefs par récupération d'énergie cinétique et énergie potentielle.

Lorsqu'un avion prend de l'altitude et de la vitesse, il augmente son énergie cinétique Ec et son énergie potentielle Ep qui sont calculées respectivement à partir des formules suivantes :
- Ec = 1/2 m v²
- Ep = m g h
où m est la masse de l'avion, v la vitesse de l'avion, g l'accélération de la pesanteur (9,81 m/s/s) et h la hauteur de l'avion par rapport au sol.

Durant la phase de montée, l'avion accroit sa vitesse pour passer d'une vitesse de décollage d'environ 230 km/h à une vitesse de croisière comprise entre environ 500 km/h et 800 km/h (Mach 0,82 à 0,84), ce qui lui permet d'accumuler une énergie cinétique très importante. Concernant l'énergie potentielle, les avions actuels croisent aux alentours d'une altitude d'environ 12 000 m.

Pendant la phase de descente, le pilote doit contrôler la vitesse de l'avion en raison de l'énergie cinétique et l'énergie potentielle accumulées et afin de ne pas dépasser une vitesse critique ou nombre de Mach limite appelée VMO/MMO (vitesse/mach limite maximale d'utilisation) au-delà de laquelle l'avion peut subir des dommages importants.

Cependant et paradoxalement, lors des phases de descente, le pilote est souvent obligé d'augmenter le régime moteur afin d'avoir suffisamment d'énergie pour la pressurisation et le conditionnement de l'air en cabine ainsi que pour alimenter les dispositifs électriques à bord. Dans ce cas, le pilote augmente le régime moteur afin de couvrir ces demandes en énergie électrique et pneumatique tout en sortant les aérofreins pour ne pas dépasser la vitesse critique ou le nombre de Mach limite VMO/MMO. Cette solution n'est pas satisfaisante puisqu'elle entraîne une surconsommation importante de carburant au niveau des moteurs alors même que ceux-ci sont dans une phase de bas-régime dans cette phase de vol (descente).

Par conséquent, il existe un besoin pour disposer dans un aéronef d'une source d'énergie apte à fournir de l'énergie électrique, et ce indépendamment du régime moteur. Ce besoin est d'autant plus important qu'il est actuellement envisagé de remplacer les moyens hydrauliques de mise en oeuvre de la plupart des fonctions d'un avion (par exemple sortie des trains d'atterrissage, freinage, etc.) par des moyens entièrement électriques afin notamment d'alléger la masse globale de l'avion.

Il est par ailleurs connu d'équiper les extrémités des ailes des avions avec des ballonnets de forme sensiblement ogivale afin de réduire les effets négatifs des tourbillons en bout d'aile (vortex), ces ballonnets permettant de limiter la traînée et, par conséquent, la perte d'énergie en bout d'aile. En outre, on connaît le document US 2013/048780, qui est considéré comme l'art antérieur le plus proche et décrit les caractéristiques du préambule de la revendication 1.

### Objet et résumé de l'invention

A cet effet, selon l'invention, il est proposé un système de génération d'énergie électrique pour aéronef selon les caractéristiques d e la revendication indépendante 1. Ainsi, un aéronef équipé d'au moins un tel système dispose d'une source d'énergie apte à fournir un supplément d'énergie électrique indépendante de celle fournie par les moteurs. Un système selon l'invention peut par exemple être monté à l'extrémité des ailes d'un avion et/ou à l'extrémité d'une ou plusieurs parties de l'empennage de celui-ci.

Lorsque les moyens d'admission d'air du système de l'invention sont dans leur position de fermeture, le système de l'invention est totalement aérodynamique et n'entraîne aucune trainée longitudinale pendant les phases de décollage, de montée et de croisière. Durant la phase de descente, les moyens d'admission d'air du système sont placés dans leur position d'ouverture afin de permettre à l'air externe d'entraîner la turbine et au générateur associé de produire du courant électrique par récupération de l'énergie cinétique et potentielle de l'aéronef. Les moyens d'admission d'air peuvent être également placés dans leur position d'ouverture durant les phases de décollage, de montée et de croisière si nécessaire, par exemple en cas de panne d'un ou plusieurs moteurs ou de leur générateur.

Avec le système de génération d'énergie électrique de l'invention, il n'est plus nécessaire d'augmenter le régime moteur au-delà de son régime normal durant la phase de descente, ce qui permet d'économiser à chaque vol entre 1% et 3% du carburant consommé selon le niveau atteint et la vitesse en fin de croisière.

Selon une première caractéristique du système selon l'invention, les moyens d'admission d'air comprennent des volets fixés de manière articulée sur le nez du ballonnet, les volets étant abaissés dans la position d'ouverture des moyens d'admission d'air et maintenus en alignement avec le corps du ballonnet dans la position de fermeture des moyens d'admission d'air.

Selon une deuxième caractéristique du système de l'invention, les moyens d'admission d'air comprennent des clapets ou papillons fixés de manière pivotante entre le nez et le corps du ballonnet, les clapets étant orientés perpendiculairement par rapport à la surface du ballonnet dans la position d'ouverture des moyens d'admission d'air et maintenus parallèles avec la surface du ballonnet dans la position de fermeture des moyens d'admission d'air.

Dans ces deux cas, les éléments d'admission d'air sont totalement intégrés au ballonnet du système dans leur position de fermeture afin de ne pas augmenter la traînée par des turbulences locales.

Selon une troisième caractéristique du système de l'invention, celui-ci comprend en outre des moyens de stockage de l'énergie électrique produite par le générateur d'énergie électrique. Ainsi, tout ou partie de l'énergie électrique produite par le système de l'invention peut être stockée et utilisée ultérieurement sur demande. Les moyens de stockage d'énergie électrique peuvent être choisis parmi au moins un des moyens suivant : batterie, super-condensateur et roue à inertie.

Selon une quatrième caractéristique de l'invention, le système comprend des ouvertures dans la partie arrière du ballonnet permettant d'évacuer le flux d'air circulant à l'intérieur du ballonnet et de refroidir l'électronique de puissance associée au générateur électrique ainsi que les moyens de stockage d'énergie électrique en particulier lorsqu'ils sont constitués par des batteries qui peuvent s'échauffer lors de leur charge.

Selon une cinquième caractéristique de l'invention, la turbine comprend des aubes à pas variable qui permettent dans ce cas de contrôler la vitesse de rotation de la turbine en fonction de la vitesse du flux d'air frappant cette dernière et donc de réguler la fréquence du générateur électrique.

L'invention a également pour objet un aéronef comprenant au moins un système selon l'invention. L'aéronef peut notamment correspondre à un avion comportant un système selon l'invention à l'extrémité de chacune de ses ailes et/ou à l'extrémité d'une ou plusieurs parties de son empennage.

Selon un premier aspect de l'aéronef de l'invention, celui-ci comprend un dispositif de contrôle pour commander automatiquement l'ouverture des moyens d'admission d'air au moins lors d'une phase de descente de l'aéronef. L'aéronef peut ainsi disposer d'une source d'énergie électrique supplémentaire lors des phases de descente sans avoir à augmenter le régime moteur appliqué couramment durant cette phase.

Selon un deuxième aspect de l'aéronef de l'invention, celui-ci comprend un dispositif de contrôle pour commander automatiquement l'ouverture des moyens d'admission d'air en cas de panne d'au moins un moteur de l'aéronef et/ou d'un générateur du ou des moteurs de l'aéronef.

Selon un troisième aspect de l'aéronef de l'invention, le ou les systèmes de génération d'énergie électrique peuvent également être commandés manuellement au moyen d'un bouton ou interrupteur de commande placé dans le cockpit de l'avion. Le pilote ou son copilote a ainsi la possibilité de déclencher manuellement l'ouverture des moyens d'admission d'air et, par conséquent, la production d'énergie électrique, lorsqu'il le souhaite et en particulier en cas de secours (panne totale d'un ou plusieurs moteurs principaux ou perte de la génération électrique d'un ou plusieurs de ces moteurs) ou de situation électrique critique (« Electric Airplane Emergency »).

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective d'un avion équipé de systèmes de génération d'énergie électrique conformément à un mode de réalisation de l'invention,
- la figure 2 est une vue schématique en coupe d'un système de génération d'énergie électrique de la figure 1 en position fermée conformément à un mode de réalisation de l'invention,
- la figure 3 est une vue schématique en coupe d'un système de génération d'énergie électrique de la figure 1 en position ouverte conformément à un mode de réalisation de l'invention,
- les figures 4A et 4B sont des vues schématiques en coupe montrant un système de génération d'énergie électrique en position fermée conformément à un autre mode de réalisation de l'invention,
- les figures 5A et 5B sont des vues schématiques en coupe montrant un système de génération d'énergie électrique en position ouverte conformément à un autre mode de réalisation de l'invention.

### Description détaillée de modes de réalisation

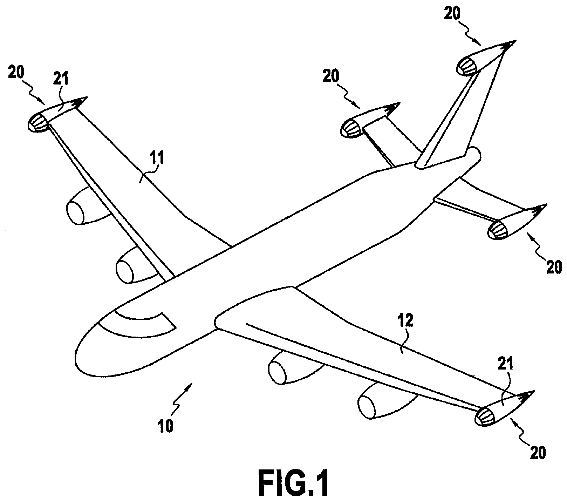

La figure 1 montre un avion 10 comprenant conformément à un mode de réalisation de l'invention deux systèmes de génération d'énergie électrique 20 placés respectivement à l'extrémité des ailes 11 et 12. Chaque système 20 comprend un carénage aérodynamique 21 correspondant ici à un ballonnet en forme d'ogive du type de ceux montés en extrémité des ailes des avions ou missiles pour réduire ou « casser » le tourbillon (vortex) en bout d'aile et réduire la trainée aérodynamique parasite de ces tourbillons. La forme du carénage est essentiellement une forme ogivale ou ovoïde plus ou moins effilée suivant la taille et la forme de l'aile sur laquelle le système de l'invention doit être monté. Toute autre forme permettant de réduire la traînée aérodynamique peut être utilisée. En supplément ou à la place des deux systèmes de génération d'énergie électrique 20 placés en bout d'ailes, l'avion peut également comprendre un ou plusieurs systèmes 20 placés à l'extrémité de parties de l'empennage de l'avion comme illustré sur la figure 1.

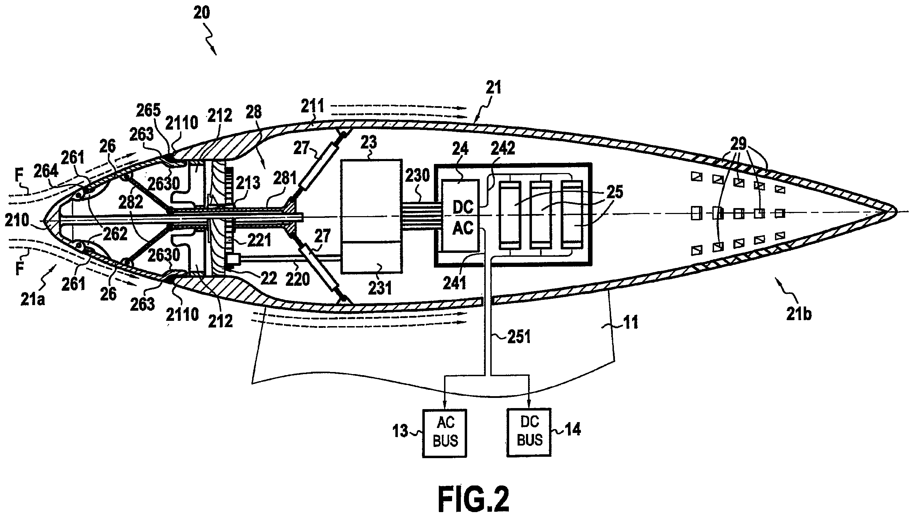

Comme illustré sur la figure 2, chaque système 20 renferme à l'intérieur de son carénage 21 une turbine 22 dont l'arbre 220 est relié au rotor (non représenté) d'un générateur électrique 23. Le générateur électrique 23 est une machine tournante, par exemple un alternateur. Dans l'exemple décrit ici, l'arbre 220 est relié au générateur électrique 23 via un réducteur 231.

Le régime de la turbine pouvant varier significativement compte-tenu des variations de vitesse de l'avion, le système 20 comprend en outre un régulateur 24 relié à la sortie 230 du générateur électrique. Le régulateur 24 a pour fonction de convertir la tension alternative à amplitude variable produite par le générateur en une tension alternative d'amplitude fixe et/ou en une tension continue. Dans l'exemple décrit ici, le régulateur 24 réalise ces deux fonctions et comprend à cet effet une première sortie 241 délivrant une tension alternative d'amplitude fixe qui est utilisée pour être directement injectée dans le réseau primaire d'alimentation électrique 13 de l'avion et une deuxième sortie 242 délivrant une tension continue qui est destinée à recharger des éléments de stockage d'énergie électrique 25, ici des batteries constituées par exemple d'accumulateur nickel-cadmium ou lithium-ion. Selon des variantes de réalisation, les éléments de stockage d'énergie électrique peuvent être également formés par des super-condensateurs ou des roues à inertie. L'énergie électrique stockée dans les éléments 25 est injectée sur demande par une sortie 251 dans le réseau secondaire d'alimentation électrique 14 de l'avion.

L'énergie électrique immédiatement disponible à la sortie 241 du régulateur ou celle stockée préalablement dans les éléments de stockage 25 et disponible à la sortie 251 peut être utilisée lors des phases de descente pour alimenter de nombreux dispositifs de l'avion comme notamment :
- pressurisation de la cabine de l'avion,
- conditionnement de l'air de cabine,
- tapis chauffants de dégivrage des bords d'attaque de la voilure,
- système électrique de sortie de train d'atterrissage,
- freinage électrique.

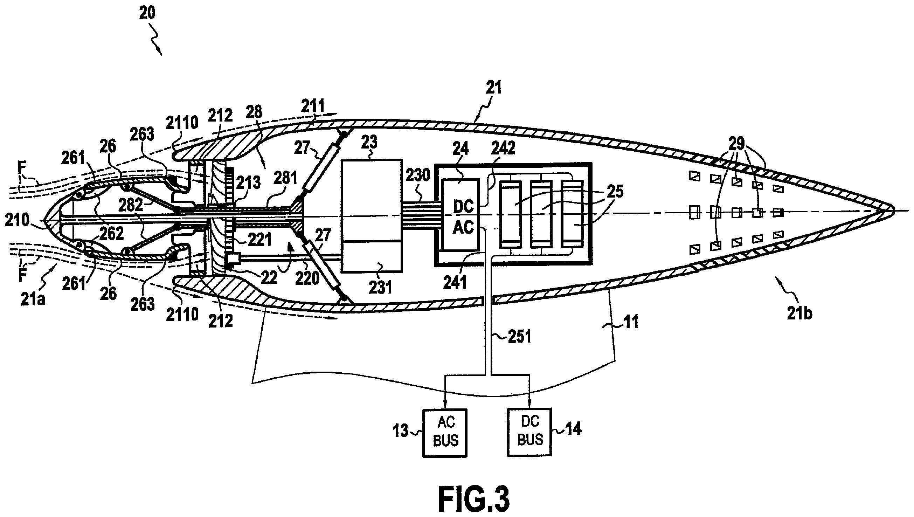

Chaque système de génération d'énergie électrique 20 comporte en outre dans la partie avant 21a du carénage 21 des moyens d'admission d'air qui sont mobiles entre une position d'ouverture dans laquelle la turbine 22 est exposée au flux d'air externe au carénage (figure 3) et une position de fermeture dans laquelle la turbine est masquée dans le carénage (figure 2).

Dans le mode de réalisation décrit ici, les moyens d'admission d'air sont constitués par des volets ou paupières 26 de forme courbée qui sont disposés entre le nez 210 et le corps 211 du carénage 21. L'extrémité amont 261 de chaque volet 26 est fixée sur le nez 210 par une liaison articulée 262 tandis que l'extrémité aval 263 de chaque volet 26 est libre. L'extrémité aval 263 présente une portion 2630 de forme courbée qui est en appui sur l'extrémité amont 2110 du corps 211 lorsque les volets 26 sont dans la position de fermeture comme illustré sur la figure 2. Afin de réduire une éventuelle traînée due à des tourbillons créés au niveau des jeux présents entre les volets et le carénage, un joint d'étanchéité annulaire amont 264 est disposé dans la portion présente entre le nez 210 et les extrémités amont 261 des volets 26 tandis qu'un joint d'étanchéité annulaire aval 265 est disposé entre l'extrémité amont 2110 du corps 211 et les extrémités aval 263 des volets 26.

Dans l'exemple décrit ici, le maintien et le déplacement des volets 26 entre une position de fermeture et une position d'ouverture sont assurés par des vérins d'actionnement 27 chacun fixés, d'un côté, à la paroi interne du carénage 21 et, de l'autre côté, à un volet 26 via une tringlerie 28. Dans la position de fermeture des moyens d'admission d'air telle que représentée en figure 2, les vérins 27 exercent une poussée sur l'axe 281 de la tringlerie 28 qui maintien les volets 26 en position fermée par l'intermédiaire de bras articulés 282 reliés à l'extrémité opposée de l'axe 281. Dans la position de fermeture des moyens d'admission d'air telle que représentée sur la figure 3, les vérins 27 exercent une traction sur l'axe 281 de manière à entraîner sa rétractation en aval et à provoquer l'abaissement des volets 26.

Dans le mode réalisation décrit dans les figures 2 et 3, l'axe 281 de la tringlerie 28 passe par le centre de la turbine 22. L'axe 281 est supporté par une portion de carénage interne de forme axisymétrique 212 destinée à diriger le flux d'air externe pénétrant dans le carénage 21 sur les aubes de la turbine 22. La portion de carénage interne 212 supporte également un palier à roulement 213 de la turbine 22. La turbine 22 comporte sur sa partie arrière une roue crantée 221 engagée avec l'arbre 220 de la turbine 22 qui est déporté par rapport à l'axe de celle-ci.

En agissant sur les vérins d'actionnement 27, on peut commander l'ouverture et la fermeture des volets et, par conséquent, la génération ou non d'énergie électrique par le système 20. Ainsi, lors de la mise en position d'ouverture des moyens d'admission d'air comme illustrée sur la figure 3, les volets 26 sont abaissés à l'intérieur du carénage 21, ce qui permet au flux d'air externe F s'écoulant sur le carénage 21 d'entrer à l'intérieur de celui-ci et d'entraîner en rotation la turbine 22 qui, par son couplage avec le générateur électrique 23, va permettre de produire de l'énergie électrique. Dans les cas où la génération d'énergie électrique par le système 20 n'est pas nécessaire et/ou lors des phases de décollage, de montée ou de croisière, les volets 26 sont maintenus dans la position de fermeture des moyens d'admission d'air comme illustrés sur la figure 2 pour diminuer la traînée aérodynamique. Dans cette position, les volets sont placés en alignement avec la forme aérodynamique du carénage 21 masquant ainsi totalement la turbine 22 à l'intérieur du carénage ainsi que tous les autres éléments utilisés pour la génération et le stockage d'énergie électrique. Par conséquent, dans la position de fermeture des moyens d'admission d'air, les volets 26 ne créent pas de trainée longitudinale, le système 20 jouant alors pleinement le rôle de réducteur de tourbillon en bout d'aile.

La partie arrière 21b du carénage 21 est munie d'ouvertures formées ici par des ouïes ou évents 29 permettant au flux d'air admis à l'intérieur du carénage 21 de s'échapper de celui-ci lorsque les moyens d'admission d'air sont ouverts. On évite ainsi des surpressions dans le carénage 21. En outre, le flux d'air circulant ainsi à l'intérieur du carénage 21 permet de refroidir l'électronique de puissance associée au générateur électrique ainsi que les moyens de stockage d'énergie électrique en particulier lorsqu'ils sont constitués par des batteries qui peuvent s'échauffer lors de leur charge. Les ouvertures peuvent être permanentes ou obturables sur commande.

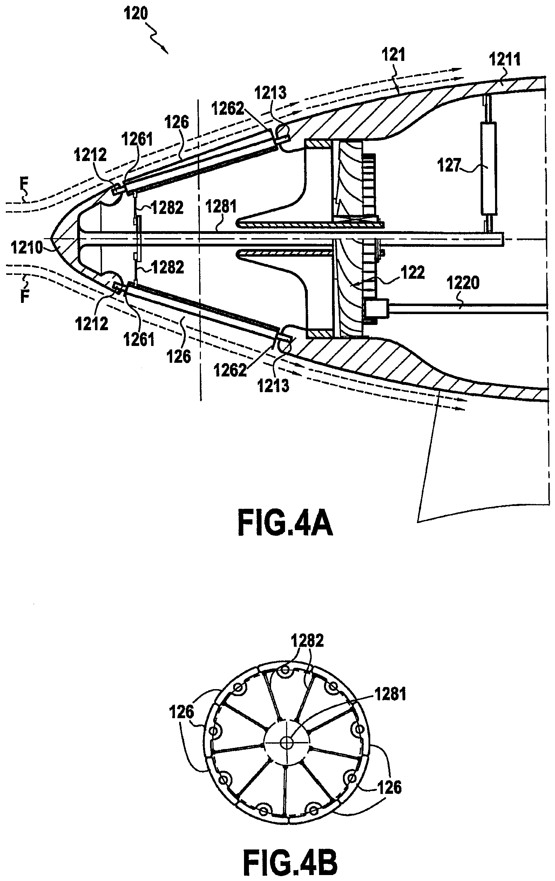

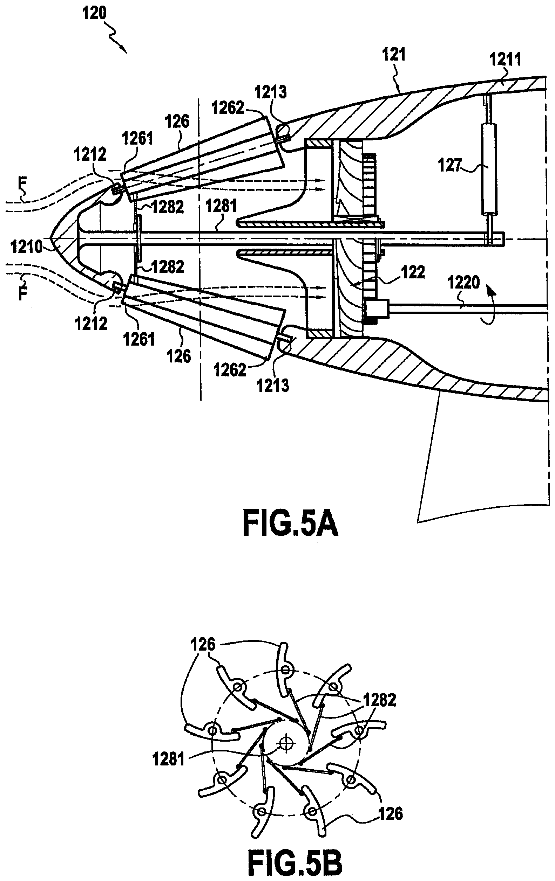

Selon une variante de réalisation d'un système de génération d'énergie électrique 120 conforme à l'invention et illustrée sur les figures 4A, 4B, 5A et 5B, les moyens d'admission d'air peuvent être constitués par des clapets ou papillons 126 s'étendant entre le nez 1210 et le corps 1211 du carénage 121. Plus précisément, les extrémités amont 1261 et aval 1262 de chaque clapet 126 sont respectivement fixées au nez 1210 et au corps 1211 par des liaisons pivotantes 1212 et 1213. Dans l'exemple décrit ici, chaque clapet est relié à un axe pivotant 1281 par une biellette 1282. Le pivotement de l'axe 1281 et, par conséquent, le pivotement des clapets 126 est assuré par un vérin 127 relié d'un côté à l'extrémité libre opposée de l'axe 1281 et de l'autre côté à la paroi interne du carénage 121. Les autres parties du système de génération d'énergie électrique 120 sont identiques à celles du système 20 déjà décrit ci-avant et ne seront pas décrites de nouveau par souci de simplification.

En agissant sur le vérin d'actionnement 127, on peut commander l'ouverture et la fermeture des volets et, par conséquent, la génération ou non d'énergie électrique par le système 120. Ainsi, lors de la mise en position d'ouverture des moyens d'admission d'air comme illustré sur les figure 5A et 5B, le vérin 127 est actionné pour entraîner le pivotement de l'axe 1281 et, par conséquent, celui des clapets 126 dans la position illustrée sur la figure 5B. Cette position des clapets 126 permet au flux d'air externe F s'écoulant sur le carénage 121 d'entrer à l'intérieur de celui-ci et d'entraîner en rotation la turbine 122 qui, par l'intermédiaire de son arbre 1220 couplé avec un générateur électrique (non représenté sur la figure 5A), va permettre de produire de l'énergie électrique. Sur la figure 5B, on peut noter que les clapets 126 présentent une bonne transparence aérodynamique (faible traînée) dans leur position d'ouverture.

Dans les cas où la génération d'énergie électrique par le système 120 n'est pas nécessaire et/ou lors des phases de décollage, montée ou croisière, les clapets 126 sont maintenus dans la position de fermeture des moyens d'admission d'air comme illustrés sur les figures 4A et 4B. Dans cette position, les clapets sont placés en alignement avec la forme aérodynamique du carénage 121 masquant ainsi totalement la turbine 122 à l'intérieur du carénage ainsi que tous les autres éléments utilisés pour la génération et le stockage d'énergie électrique. Par conséquent, dans la position de fermeture des moyens d'admission d'air, les clapets 126 ne créent pas de trainée longitudinale, le système 120 jouant alors pleinement le rôle de réducteur de tourbillon en bout d'aile.

Afin de contrôler la vitesse de rotation de la turbine du système de génération électrique de l'invention en fonction de la vitesse du flux d'air entraînant cette dernière, la turbine peut comporter des aubes à pas variable, le pas des aubes étant augmenté lorsque la vitesse du flux d'air est importante et diminué lorsque la vitesse du flux d'air est plus faible.

La commande du ou des systèmes de génération d'énergie électrique de l'invention peut être réalisée automatiquement par le système de contrôle (ordinateur de bord) de l'avion. Le système de contrôle de l'avion peut être notamment programmé pour :
- commander automatiquement l'ouverture des moyens d'admission d'air au moins lors d'une phase de descente de l'aéronef,
- commander automatiquement l'ouverture des moyens d'admission d'air en cas de panne d'au moins un moteur de l'aéronef,
- commander automatiquement l'ouverture des moyens d'admission d'air en cas de panne d'un générateur du ou des moteurs de l'aéronef.

Le ou les systèmes de génération d'énergie électrique peuvent également être commandés manuellement au moyen d'un bouton ou interrupteur de commande placé dans le cockpit de l'avion. Le pilote ou son copilote a ainsi la possibilité de déclencher manuellement l'ouverture des moyens d'admission d'air et, par conséquent, la production d'énergie électrique, lorsqu'il le souhaite et en particulier en cas de secours (panne totale d'un ou plusieurs moteurs principaux ou perte de la génération électrique d'un ou plusieurs de ces moteurs) ou de situation électrique critique (« Electric Airplane Emergency »).

Ainsi, le système de génération d'énergie électrique de l'invention remplace avantageusement l'éolienne de secours, connues sous la désignation RAT (« Ram Air Turbine »), présente sur les avions actuels et qui, en outre d'être lourde et couteuse, présente parfois des problèmes de fiabilité.

En outre, des avantages déjà mentionnés ci-avant, le système de génération d'énergie électrique est placé à des endroits de l'aéronef facilement accessibles, ce qui simplifie grandement leur maintenance, en particulier en ce qui concerne l'électronique de puissance et les éléments de stockage d'énergie qui sont immédiatement accessibles tout en étant isolés de l'espace intérieur de l'avion occupé par les passagers, ce qui empêche d'éventuels gaz nocifs, dégagés par exemple lors de l'emballement thermique d'une ou plusieurs batteries, d'atteindre la cabine de l'avion.

## Revendications

1. Système de génération d'énergie électrique (20) pour aéronef (10) comprenant un carénage aérodynamique correspondant à un ballonnet en forme d'ogive (21) renfermant au moins une turbine (22) logée dans la partie avant (21a) du ballonnet (21) et un générateur d'énergie électrique (23) relié à ladite turbine, la partie avant (21a) du ballonnet (21) étant équipée de moyens d'admission d'air mobiles entre une position d'ouverture dans laquelle la turbine (22) est exposée au flux d'air externe au ballonnet (21) et une position de fermeture dans laquelle la turbine (22) est masquée dans le ballonnet (21), **caractérisé en ce que** les moyens d'admission d'air comprennent des volets (26) fixés de manière articulée sur le nez (210) du ballonnet (21) ou des clapets (126) fixés de manière pivotante entre le nez (1210) et le corps (1211) du ballonnet (121).

2. Système selon la revendication 1, **caractérisé en ce que** les moyens d'admission d'air comprennent des volets (26) fixés de manière articulée sur le nez (210) du ballonnet (21), les volets (26) étant abaissés dans la position d'ouverture des moyens d'admission d'air et maintenus en alignement avec le corps (211) du ballonnet (21) dans la position de fermeture des moyens d'admission d'air.

3. Système selon la revendication 1, **caractérisé en ce que** les moyens d'admission d'air comprennent des clapets ou papillons (126) fixés de manière pivotante entre le nez (1210) et le corps (1211) du ballonnet (121), les clapets (126) étant orientés perpendiculairement par rapport à la surface du ballonnet (121) dans la position d'ouverture des moyens d'admission d'air et maintenus parallèles avec la surface du ballonnet (121) dans la position de fermeture des moyens d'admission d'air.

4. Système selon l'une quelconque des revendications 1 à 3, **caractérisé en ce qu'**il comprend en outre des moyens de stockage (25) de l'énergie électrique produite par le générateur d'énergie électrique (23).

5. Système selon la revendication 4, **caractérisé en ce qu'**il comprend au moins un moyen de stockage (25) d'énergie électrique choisi parmi au moins un des moyens suivant : batterie, super-condensateur et roue à inertie.

6. Système selon l'une quelconque des revendications 1 à 5, **caractérisé en ce qu'**il comprend des ouvertures (29) dans la partie arrière du carénage (21b).

7. Système selon l'une quelconque des revendications 1 à 6, **caractérisé en ce que** la turbine (22) comprend des aubes à pas variable.

8. Aéronef (10) comprenant au moins un système de génération d'énergie électrique (20 ; 120) selon l'une quelconque des revendications 1 à 7.

9. Aéronef selon la revendication 8, **caractérisé en ce qu'**il comprend un dispositif de contrôle pour commander automatiquement l'ouverture des moyens d'admission d'air au moins lors d'une phase de descente de l'aéronef.

10. Aéronef selon la revendication 8 ou 9, **caractérisé en ce qu'**il comprend un dispositif de contrôle pour commander automatiquement l'ouverture des moyens d'admission d'air en cas de panne d'au moins un moteur de l'aéronef.

11. Aéronef selon l'une quelconque des revendications 8 à 10, **caractérisé en ce qu'**il comprend un dispositif de contrôle pour commander automatiquement l'ouverture des moyens d'admission d'air en cas de panne d'un générateur du ou des moteurs de l'aéronef.

12. Aéronef selon l'une quelconque des revendications 8 à 11, **caractérisé en ce qu'**il comprend un dispositif de contrôle pour commander manuellement l'ouverture des moyens d'admission d'air en cas de besoin urgent d'énergie électrique.

## Patentansprüche

1. System zur Erzeugung von elektrischer Energie (20) für ein Luftfahrzeug (10), umfassend eine aerodynamische Verkleidung, die einem spitzbogenförmigen Ballon (21) entspricht, welcher wenigstens eine im vorderen Teil (21 a) des Ballons (21) untergebrachte Turbine (22) und einen mit der Turbine verbundenen Generator für elektrische Energie (23) einschließt, wobei der vordere Teil (21 a) des Ballons (21) mit Luftzuführmitteln ausgestattet ist, die zwischen einer Öffnungsstellung, in der die Turbine (22) dem Luftstrom außerhalb des Ballons (21) ausgesetzt ist, und einer Schließstellung, in der die Turbine (22) in dem Ballon (21) verdeckt ist, beweglich sind,
**dadurch gekennzeichnet, dass** die Luftzuführmittel Klappen (26), die an der Nase (210) des Ballons (21) gelenkig befestigt sind, oder Klappen (126), die zwischen der Nase (1210) und dem Körper (1211) des Ballons (121) schwenkbar befestigt sind, umfassen.

2. System nach Anspruch 1, **dadurch gekennzeichnet, dass** die Luftzuführmittel Klappen (26), die an der Nase (210) des Ballons (21) gelenkig befestigt sind, umfassen, wobei die Klappen (26) in der Öffnungsstellung der Luftzuführmittel gesenkt werden und in der Schließstellung der Luftzuführmittel mit dem Körper (211) des Ballons (21) fluchtend gehalten werden.

3. System nach Anspruch 1, **dadurch gekennzeichnet, dass** die Luftzuführmittel Klappen oder Drosselklappen (126), die zwischen der Nase (1210) und dem Körper (1211) des Ballons (121) schwenkbar befestigt sind, umfassen, wobei die Klappen (126) in der Öffnungsstellung der Luftzuführmittel senkrecht zu der Oberfläche des Ballons (121) ausgerichtet sind und in der Schließstellung der Luftzuführmittel zu der Oberfläche des Ballons (121) parallel gehalten sind.

4. System nach einem der Ansprüche 1 bis 3, **dadurch gekennzeichnet, dass** es ferner Mittel zur Speicherung (25) der durch den Generator für elektrische Energie (23) erzeugten elektrischen Energie umfasst.

5. System nach Anspruch 4, **dadurch gekennzeichnet, dass** es wenigstens ein Mittel zur Speicherung (25) von elektrischer Energie umfasst, das aus wenigstens einem der folgenden Mittel ausgewählt ist: Batterie, Superkondensator und Trägheitsrad.

6. System nach einem der Ansprüche 1 bis 5, **dadurch gekennzeichnet, dass** es Öffnungen (29) in dem rückwärtigen Teil der Verkleidung (21 b) umfasst.

7. System nach einem der Ansprüche 1 bis 6, **dadurch gekennzeichnet, dass** die Turbine (22) Schaufeln mit einstellbarer Steigung umfasst.

8. Luftfahrzeug (10), das wenigstens ein System zur Erzeugung von elektrischer Energie (20; 120) nach einem der Ansprüche 1 bis 7 umfasst.

9. Luftfahrzeug nach Anspruch 8, **dadurch gekennzeichnet, dass** es eine Steuervorrichtung umfasst, um das Öffnen der Luftzuführmittel wenigstens während einer Sinkflugphase des Luftfahrzeugs automatisch zu steuern.

10. Luftfahrzeug nach Anspruch 8 oder 9, **dadurch gekennzeichnet, dass** es eine Steuervorrichtung umfasst, um das Öffnen der Luftzuführmittel im Fall eines Ausfalls von wenigstens einem Triebwerk des Luftfahrzeugs automatisch zu steuern.

11. Luftfahrzeug nach einem der Ansprüche 8 bis 10, **dadurch gekennzeichnet, dass** es eine Steuervorrichtung umfasst, um das Öffnen der Luftzuführmittel im Fall eines Ausfalls eines Generators des oder der Triebwerke des Luftfahrzeugs automatisch zu steuern.

12. Luftfahrzeug nach einem der Ansprüche 8 bis 11, **dadurch gekennzeichnet, dass** es eine Steuervorrichtung umfasst, um das Öffnen der Luftzuführmittel im Fall eines dringenden Bedarfs an elektrischer Energie manuell zu steuern.

## Claims

1. An electrical energy generator system (20) for an aircraft (10), the system comprising a streamlined fairing corresponding to a shell (21) having the shape of a wing tip tank and containing at least one turbine (22) housed in the front portion (21a) of the shell (21) and an electrical energy generator (23) connected to said turbine, the front portion (21a) of the shell (21) being fitted with air admission means that are movable between an open position in which the turbine (22) is exposed to the air stream outside the shell (21), and a closed position in which the turbine (22) is masked inside the shell (21), **characterized in that** the air admission means comprise flaps (26) fastened in hinged manner to the nose (210) of the shell (21) or slats (126) pivotally fastened between the nose (1210) and the body (1211) of the shell (121).

2. A system according to claim 1, **characterized in that** the air admission means comprise flaps (26) fastened in hinged manner to the nose (210) of the shell (21), the flaps (26) being lowered in the open position of the air admission means and being held in alignment with the body (211) of the shell (21) in the closed position of the air admission means.

3. A system according to claim 1, **characterized in that** the air admission means comprise slats or butterfly members (126) pivotally fastened between the nose (1210) and the body (1211) of the shell (121), the slats (126) extending perpendicularly relative to the surface of the shell (121) in the open position of the air admission means and being held parallel with the surface of the shell (121) in the closed position of the air admission means.

4. A system according to any one of claims 1 to 3, **characterized in that** it further comprises storage means (25) for storing the electrical energy produced by the electrical energy generator (23).

5. A system according to claim 4, **characterized in that** it includes at least one electrical energy storage means (25) selected from at least one of the following means: battery; supercapacitor; and flywheel.

6. A system according to any one of claims 1 to 5, **characterized in that** it includes openings (29) in the rear portion (21b) of the shell (21).

7. A system according to any one of claims 1 to 6, **characterized in that** the turbine (22) has variable pitch blades.

8. An aircraft (10) including at least one electrical energy generator system (20; 120) according to any one of claims 1 to 7.

9. An aircraft according to claim 8, **characterized in that** it includes a control device for causing the air admission means to open automatically, at least during a stage of the aircraft descending.

10. An aircraft according to claim 8 or claim 9, **characterized in that** it includes a control device for automatically causing the air admission means to open in the event of the failure of at least one engine of the aircraft.

11. An aircraft according to any one of claims 8 to 10, **characterized in that** it includes a control device for causing the air admission means to open automatically in the event of a failure of a generator of at least one engine of the aircraft.

12. An aircraft according to any one of claims 8 to 11, **characterized in that** it includes a control device enabling the air admission means to be opened manually in the event of an urgent need for electrical energy.
